# EUROPÄISCHE PATENTSCHRIFT

(11) **EP 3 333 655 B1**
(45) Veröffentlichungstag und Bekanntmachung des Hinweises auf die Patenterteilung: **05.12.2018**
(21) Anmeldenummer: 16202701.5
(22) Anmeldetag: 07.12.2016
(51) Int. Cl.: G05B 19/05, G01D 21/00

(54) **SPEICHERPROGRAMMIERBARE STEUERUNG**
PROGRAMMABLE LOGIC CONTROLLER
AUTOMATE PROGRAMMABLE INDUSTRIEL

(43) Veröffentlichungstag der Anmeldung: 13.06.2018
(73) Patentinhaber: SICK AG, 79183 Waldkirch/Breisgau (DE)
(72) Erfinder: Hörner, Sebastian, 79219 Staufen (DE); Brunsch, Sebastian, 77972 Mahlberg (DE); Saumer, Markus, 77948 Friesenheim (DE)
(74) Vertreter: Manitz Finsterwald Patentanwälte PartmbB

(56) Entgegenhaltungen:
- EP-A2- 1 022 702
- EP-A2- 2 685 220
- DE-A1-102008 036 554
- JP-A- 2015 031 582
- US-A- 6 018 700
- US-A1- 2011 291 488

## Beschreibung

Die vorliegende Erfindung betrifft ein elektrisches Gerät, nämlich eine speicherprogrammierbare Steuerung (SPS), mit
- einer Energieversorgung, die elektrische Energie zum Betrieb der SPS bereitstellt, und
- zumindest einem Messeingang, wobei der Messeingang ausgebildet ist, ein elektrisches Eingangssignal zu messen und/oder zu detektieren.

Derartige elektrische Geräte, insbesondere in Form von speicherprogrammierbaren Steuerungen, sind grundsätzlich bekannt und dienen beispielsweise dazu, industrielle Fertigungsprozesse zu überwachen, zu steuern und zu regeln. Hierzu werden von der SPS mittels des Messeingangs oder mittels einer Vielzahl von Messeingängen z.B. Sensordaten oder Schaltsignale ausgewertet.

Die Messeingänge benötigen eine vorbestimmte Mindestspannung und/oder einen vorbestimmten Mindeststrom des elektrischen Eingangssignals, um einen High-Pegel zu detektieren. Der High-Pegel kann beispielsweise angeben, dass ein Schalter geschlossen wurde.

Das elektrische Eingangssignal verfügt aufgrund der geforderten Mindestspannung und des geforderten Mindeststroms über eine nicht unerhebliche elektrische Energie, die in dem Gerät/der SPS abgebaut werden muss und z.B. in Wärme umgewandelt wird. Insbesondere bei Verwendung einer Vielzahl von Messeingängen kann sich somit eine hohe elektrische Leistung ergeben, die in Wärme umgewandelt und aus dem elektrischen Gerät abgeführt werden muss. Bei höheren Umgebungstemperaturen kann dies beispielsweise dazu führen, dass nicht mehr alle Messeingänge des Geräts bzw. der SPS verwendet werden können ("Derating").

Aus der EP 1 022 702 A2 ist ein Messwandler bekannt, welcher ein elektrisches Messsignal zur Energieversorgung seines Betriebs verwendet. Ein weiterer sich selbst mit Energie versorgender Sensor ist aus der US 6 018 700 A bekannt.

Aus der DE 10 2008 036 554 A1 ist eine energieautarke speicherprogrammierbare Steuerung bekannt.

Es ist die der Erfindung zugrundeliegende Aufgabe, ein elektrisches Gerät anzugeben, welches ohne Abschaltung bzw. ohne Derating von Messeingängen betreibbar ist.

Diese Aufgabe wird erfindungsgemäß durch eine SPS gemäß Anspruch 1 gelöst. Die SPS ist erfindungsgemäß ausgebildet, die elektrische Energie des Eingangssignals zumindest zum Teil der Energieversorgung zuzuführen. Die elektrische Energie des Eingangssignals kann also zumindest zum Teil zum Betrieb der SPS wiederverwendet werden.

Die Erfindung ermöglicht es, dass die elektrische Energie des Eingangssignals sinnvoll genutzt werden kann, um z.B. interne Verbraucher in der SPS oder die SPS selbst zu betreiben, wodurch die Umwandlung der elektrischen Energie des Eingangssignals in Wärme unterbleibt oder verringert wird. Hierdurch wird die Gesamtverlustleistung in der SPS reduziert, wodurch sich auch die Eigenerwärmung verringert, was wiederum die Lebensdauer der SPS erhöht. Durch die geringere Eigenerwärmung sind zudem kleinere speicherprogrammierbare Steuerungen möglich, d.h. die Packungsdichte z.B. der SPS kann vergrößert werden. Schließlich brauchen auch bei höheren Umgebungstemperaturen keine Messeingänge abgeschaltet werden oder unbenutzt bleiben, da die Eingangssignale nur noch im geringen Umfang zur Erwärmung der SPS beitragen.

Weiterhin ist von Vorteil, dass die Eingangssignale höhere Ströme führen können, wodurch eine robustere Signaldetektion erreicht werden kann. Die Eingangssignale sind dann unempfindlicher gegen elektromagnetische Störungen.

Nachfolgend werden verschiedene Aspekte der erfindungsgemäßen SPS noch detaillierter erläutert.

Bei der Energieversorgung kann es sich beispielsweise um ein elektrisches Netz in der SPS handeln, das eine Versorgungsspannung führt. Die Energieversorgung kann eine Gleichspannung führen und/oder verschiedene elektrische Verbraucher der SPS, wie beispielsweise eine Recheneinheit, ein Display, Ein- und Ausgangsschnittstellen und dergleichen mit elektrischer Energie (d.h. mit der Versorgungsspannung) versorgen. Die Energieversorgung kann beispielsweise eine Stromschiene umfassen, an die elektrische Verbraucher angeschlossen werden können. Weiterhin kann die Energieversorgung mit einem Netzteil gekoppelt sein, welches der Energieversorgung elektrische Energie aus einem Niederspannungsnetz (mit z.B. 230 V oder 110 V) zuführt. Das Netzteil kann ausgebildet sein, überschüssige elektrische Energie der SPS in das Niederspannungsnetz einzuspeisen. Ein Einspeisen in das Niederspannungsnetz kann sinnvoll sein, wenn die von den Eingangssignalen stammende Energie in der SPS nicht verbraucht werden kann.

Bei dem Messeingang kann es sich um einen Eingang handeln, der ein elektrisches Eingangssignal misst oder detektiert. Beispielsweise erzeugt die SPS einen Messwert, der mit dem Eingangssignal korreliert. Das elektrische Eingangssignal kann z.B. von einem Temperatursensor, einem Not-Aus-Schalter, einem Lichtgitter, einem Laserscanner und dergleichen stammen.

Vorteilhafte Weiterbildungen der Erfindung sind der Beschreibung, den Zeichnungen sowie den Ansprüchen zu entnehmen.

Gemäß einer ersten vorteilhaften Ausführungsform umfasst die SPS einen Sensor, welcher mit dem Messeingang elektrisch verbunden ist und das Eingangssignal bereitstellt. Der Sensor kann außerhalb eines Gehäuses der SPS angeordnet sein. Das Eingangssignal stammt also von dem Sensor und/oder wird von dem Sensor erzeugt oder zumindest beeinflusst. Der Sensor kann das Eingangssignal z.B. in Abhängigkeit einer gemessenen Größe (z.B. Temperatur oder Annäherung eines Objekts) modulieren. Beispielsweise kann ein Sensor in Form eines Schalters das Eingangssignal von einem Low-Pegel (d.h. kein Stromfluss) auf einen High-Pegel (ein vorbestimmter Mindeststrom fließt in den Messeingang) umschalten, um zu signalisieren, dass der Schalter gedrückt wurde. Die elektrische Energie des so von dem Sensor an den Messeingang geleiteten Eingangssignals wird dann von der SPS derart aufbereitet, dass die elektrische Energie des Eingangssignals der Energieversorgung zumindest zum Teil zugeführt werden kann.

Gemäß einer weiteren vorteilhaften Ausführungsform umfasst die SPS zumindest einen Ausgang, welcher zur Bereitstellung eines elektrischen Ausgangssignals ausgebildet ist, wobei das Ausgangssignal dem Sensor zugeführt wird. Das Ausgangssignal kann vom Sensor zur Erzeugung des Eingangssignals verwendet werden, beispielsweise durch einfaches Durchschalten des Stroms des Ausgangssignals, welcher dann dem Messeingang als Eingangssignal zugeführt wird.

Beispielsweise wird das Ausgangssignal von einer Konstantstromquelle oder einer Spannungsquelle (z.B. der Energieversorgung) erzeugt. Der Ausgang kann also eine Konstantstromquelle oder eine Spannungsquelle umfassen. Der Ausgang kann den Sensor mit elektrischer Energie versorgen. Alternativ kann der Sensor das Eingangssignal auch selbst erzeugen, z.B. mittels einer eigenen Energieversorgung, die unabhängig von der SPS ist.

Bevorzugt umfasst der Messeingang eine Stromsenke, welche einen maximalen Strom des Eingangssignals auf einen vorbestimmten Wert begrenzt. Die Stromsenke kann also dafür sorgen, dass das Eingangssignal einen maximalen Strom von z.B. 5 mA, 10 mA oder 20 mA nicht überschreitet.

Gemäß einer weiteren vorteilhaften Ausführungsform ist ein Wandler mit dem Messeingang und der Energieversorgung gekoppelt, welcher die elektrische Energie des Eingangssignals (oder die an dem Messeingang zur Verfügung stehende elektrische Energie) zumindest zum Teil der Energieversorgung zuführt. Bei dem Wandler kann es sich z.B. um einen Schaltwandler, insbesondere einen Aufwärtswandler oder einen Buck-Boost-Konverter, einen SEPIC-Wandler (Single Ended Primary Inductance Converter) und dergleichen handeln. Insbesondere ist der Wandler ein DC-DC-Wandler. Der Wandler stellt bevorzugt eine elektrische Verbindung zwischen dem Messeingang und der Energieversorgung her.

Der Wandler kann beispielsweise eine Spule umfassen, die in Serie mit einer Diode (Freilaufdiode) geschaltet ist. Die Spule kann eine elektrische Verbindung zwischen dem Messeingang und der Diode herstellen. Zudem kann ein Schaltelement (z.B. ein Transistor) vorgesehen sein, das in leitendem Zustand die elektrische Verbindung von Spule und Diode auf ein niedrigeres Potential (z.B. Massepotential) zieht. Die Kathode der Diode kann direkt elektrisch mit einem Ladekondensator verbunden sein, wobei der Ladekondensator eine Ausgangsspannung des Wandlers bereitstellt. Ein Anschluss des Ladekondensators kann mit dem niedrigen Potential (Massepotential) elektrisch direkt verbunden sein.

Der Wandler dient insbesondere dazu, eine Spannung des Eingangssignals zu erhöhen (oder generell anzupassen), so dass das Eingangssignal der Energieversorgung zugeführt werden kann. Bevorzugt umfasst der Wandler eine Stromregelung, welche den Strom des Eingangssignals konstant hält und/oder begrenzt. Durch die Stromregelung kann der Einfluss des Wandlers auf das Eingangssignal gering gehalten werden, da der Wandler aufgrund der Strombegrenzung das Eingangssignal nicht in beliebigen Grenzen beeinflussen kann. Insbesondere ist der Wandler derart ausgelegt, dass der Strom des Eingangssignals einen vorbestimmten Schwellenwert nicht überschreitet. Bei Überschreiten des Schwellenwerts kann der Wandler abschalten. Ebenfalls kann der Wandler abschalten, wenn der Strom des Eingangssignals und/oder die elektrische Energie des Eingangssignals einen weiteren vorbestimmten Schwellenwert unterschreiten. Bei Unterschreiten dieses Schwellenwerts wäre ein effizienter Betrieb des Wandlers nicht mehr möglich, so dass der Wandler dann abgeschaltet wird. Die Abschaltung kann z.B. mittels eines Logikgatters und/oder eines Komparators erfolgen, wobei der Komparator eine Spannung oder einen Strom des Eingangssignals mit einem Referenzwert vergleicht und die Schaltfrequenz des Schaltelements in Abhängigkeit der Spannung und/oder des Stroms des Eingangssignals regelt.

Bevorzugt kann zwischen die Spule und die Diode ein Shunt-Widerstand geschaltet sein, der die Spule und die Diode elektrisch verbindet. Allgemein kann der Wandler also eine Reihenschaltung der Spule, des Shunt-Widerstands und der Diode umfassen. Die Schaltfrequenz des Schaltelements kann aufgrund der an dem Shunt-Widerstand abfallenden Spannung geregelt werden. Sinkt diese Spannung unter einen vorbestimmten Schwellenwert, so wird das Schaltelement abgeschaltet, so dass der Wandler deaktiviert wird. Der Shunt-Widerstand kann einen Widerstand von etwa 50 bis 150 Ohm aufweisen.

Gemäß einer weiteren vorteilhaften Ausführungsform umfasst die SPS mehrere Messeingänge, die jeweils mit einer separaten Wandlereinheit gekoppelt sind, wobei jede Wandlereinheit mit der Energieversorgung elektrisch verbunden ist und die elektrische Energie der jeweiligen Eingangssignale zumindest zum Teil der Energieversorgung zuführt. Bei einer Wandlereinheit kann es sich um den vorstehend erläuterten Wandler handeln. Alternativ kann eine Wandlereinheit auch nur einen Teil der Komponenten eines Wandlers umfassen und sich weitere Komponenten mit anderen Wandlereinheiten teilen, wie weiter unten ausgeführt.

Gemäß einer Ausführungsform ist jeder der Messeingänge mittels einer separaten Wandlereinheit mit der Energieversorgung elektrisch verbunden, so dass die Wandlereinheit die elektrische Energie des jeweiligen Eingangssignals des jeweiligen Messeingangs zumindest zum Teil der Energieversorgung zuführt. Die Messeingänge sind somit in Serie jeweils mit einer Wandlereinheit geschaltet, wobei die Kombination aus Messeingang und Wandlereinheit jeweils parallel zu weiteren Kombinationen aus Messeingang und Wandlereinheit geschaltet ist. In diesem Fall kann die Wandlereinheit dem vorstehend erläuterten Wandler entsprechen. Die Ausführungen zu dem Wandler gelten dann entsprechend für die Wandlereinheit.

Gemäß einer anderen Ausführungsform sind die Wandlereinheiten mit einem gemeinsamen Ladekondensator elektrisch verbunden, wobei der Ladekondensator die Wandlereinheiten mit der Energieversorgung elektrisch verbindet.

In diesem Ausführungsbeispiel können die Wandlereinheiten dem oben erläuterten Wandler entsprechen, mit dem Unterschied, dass nicht jede Wandlereinheit einen eigenen Ladekondensator umfasst, sondern dass ein gemeinsamer Ladekondensator verwendet wird, der mit den Dioden der Wandlereinheiten elektrisch direkt verbunden ist. Die Wandlereinheiten umfassen demnach z.B. eine Spule, ein Schaltelement und eine Diode. Die Diode trennt die einzelnen Wandlereinheiten und damit auch die jeweiligen Messeingänge elektrisch voneinander. Die Wandlereinheiten können jeweils identisch ausgebildet sein. Durch die Verwendung des gemeinsamen Ladekondensators wird die Energie sämtlicher Eingangssignale aller Messeingänge demselben Ladekondensator zugeführt, so dass weitere Ladekondensatoren eingespart werden können.

Gemäß einer alternativen Ausführungsform können auch alle Messeingänge mit einem einzigen Wandler elektrisch verbunden sein, so dass der einzige Wandler die elektrische Energie aller Eingangssignale der Energieversorgung zuführt.

Der Wandler oder die Wandlereinheiten können als die oben erläuterte Stromsenke dienen.

Gemäß einer weiteren vorteilhaften Ausführungsform ist der Ladekondensator mittels einer Ladeschutzdiode mit der Energieversorgung (z.B. der Stromschiene) elektrisch verbunden. Die Ladeschutzdiode unterbindet ein Aufladen des Ladekondensators durch die Energieversorgung.

Bevorzugt umfasst die SPS eine erste und eine zweite Detektionseinrichtung, welche eingerichtet sind, das Eingangssignal des Messeingangs zu messen und/oder zu detektieren. Das Eingangssignal kann also redundant sowohl durch die erste Detektionseinrichtung als auch durch die zweite Detektionseinrichtung ausgewertet (d.h. gemessen und/oder detektiert) werden. Bei der SPS kann es sich demnach um ein sogenanntes sicheres Gerät (um eine sichere SPS) handeln.

Gemäß einer weiteren vorteilhaften Ausführungsform führt die Energieversorgung eine Gleichspannung von 24 V und/oder ist das Eingangssignal ein Gleichstrom mit einer Stärke von bis zu 20 mA. Das Eingangssignal kann ebenfalls eine Spannung von 24 V oder von weniger als 24 V aufweisen. Für die Energieversorgung der SPS hat sich eine Gleichspannung von 24 V als vorteilhaft herausgestellt, da sich eine solche Gleichspannung auf einfache Weise mit dem genannten Wandler erzeugen lässt.

Zur sicheren Detektion eines High-Pegels des Eingangssignals kann ein Strom von zumindest 5 mA, bevorzugt von zumindest 10 mA, des Eingangssignals benötigt werden. Der Strom des Eingangssignals kann auf maximal 20 mA begrenzt sein.

Erfindungsgemäß ist das elektrische Gerät eine speicherprogrammierbare Steuerung (SPS). Bevorzugt weist die SPS eine Vielzahl von Messeingängen auf. Die elektrische Energie der Eingangssignale der Messeingänge kann verwendet werden, die SPS selbst oder Komponenten der SPS zu betreiben.

Die SPS umfasst bevorzugt eine Recheneinrichtung, welche den Betrieb der SPS steuert. Die Recheneinrichtung kann beispielsweise die von dem Messeingang gemessenen oder detektierten Signale auswerten und Steuerbefehle an externe Aktoren übermitteln. Hierzu kann die SPS einen Anschluss für einen Feldbus (z.B. Sercos 3 oder EtherCat) aufweisen und/oder mit einem Feldbus gekoppelt sein.

Nachfolgend wird die Erfindung rein beispielhaft unter Bezugnahme auf die Zeichnungen beschrieben. Es zeigen:
- Fig. 1: eine schematische Ansicht einer speicherprogrammierbaren Steuerung (SPS) mit zwei Sensoren; und
- Fig. 2: eine schematische Darstellung zweier Wandlereinheiten mit einem gemeinsamen Ladekondensator.

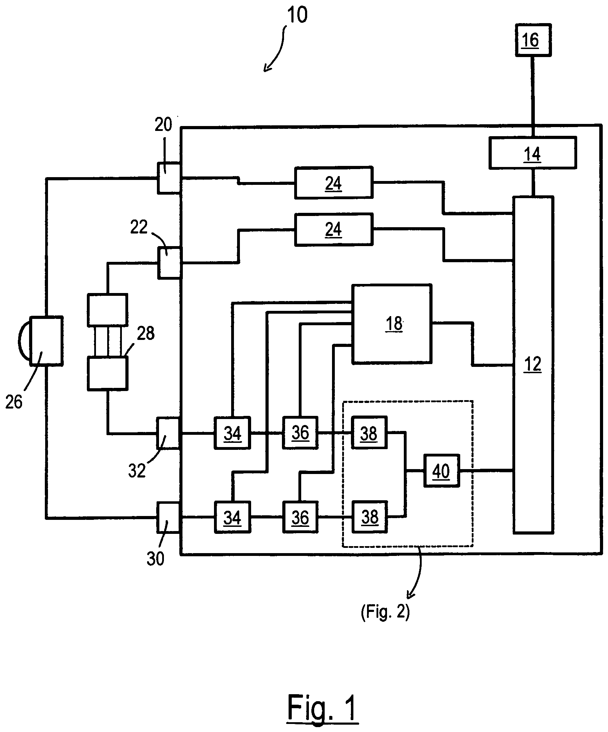

Fig. 1 zeigt ein elektrisches Gerät, welches als eine speicherprogrammierbare Steuerung (SPS) 10 ausgebildet ist. Die SPS 10 weist eine Energieversorgung in Form einer Stromschiene 12 auf. Die Energieversorgung umfasst ein Netzteil 14, welches eine Spannung von 230 V einer Steckdose 16 in eine Gleichspannung von 24 V umwandelt, die dann an der Stromschiene 12 verfügbar ist. Das Netzteil 14 kann - entgegen der in Fig. 1 gezeigten Anordnung - auch außerhalb der SPS 10 angeordnet sein. Die SPS 10 umfasst eine Steuereinheit 18 in Form eines Mikroprozessors, welche die SPS 10 steuert.

Die SPS 10 umfasst einen ersten Ausgang 20 und einen zweiten Ausgang 22, wobei jedem Ausgang 20, 22 ein Schalter 24 zugeordnet ist, der eine konstante Ausgangsspannung von 24 V an den jeweiligen Ausgang 20, 22 durchschalten kann. Die Schalter 24 sowie die Steuereinheit 18 sind elektrisch mit der Stromschiene 12 verbunden und werden von der Stromschiene 12 mit elektrischer Energie versorgt.

Der erste Ausgang 20 ist elektrisch mit einem Not-Aus-Schalter 26 verbunden. Der zweite Ausgang 22 ist elektrisch mit einem Lichtgitter 28 verbunden. Der Not-Aus-Schalter 26 ist wiederum elektrisch mit einem ersten Messeingang 30 verbunden. In entsprechender Weise ist das Lichtgitter 28 elektrisch mit einem zweiten Messeingang 32 verbunden.

Der Not-Aus-Schalter 26 kann eine elektrische Verbindung zwischen dem ersten Ausgang 20 und dem ersten Messeingang 30 herstellen, wenn der Not-Aus-Schalter 26 gedrückt wird. Das Lichtgitter 28 stellt mittels einer (nicht gezeigten) Auswerteschaltung eine elektrische Verbindung zwischen dem zweiten Ausgang 22 und dem zweiten Messeingang 32 her, wenn sich ein Objekt im Lichtgitter 28 befindet.

Wird der Not-Aus-Schalter 26 gedrückt oder detektiert das Lichtgitter 28 ein Objekt, so wird die von dem jeweiligen Ausgang 20, 22 bereitgestellte Spannung an die Messeingänge 30, 32 durchgeleitet. Alternativ ist es auch möglich, dass z.B. bei gedrücktem Not-Aus-Schalter eine elektrische Verbindung zwischen dem Ausgang 20 und dem Messeingang 30 unterbrochen wird.

Jedem Messeingang 30, 32 ist eine erste Detektionseinrichtung 34 und eine zweite Detektionseinrichtung 36 nachgeschaltet, wobei die Detektionseinrichtungen 34, 36 in Serie geschaltet sind. Die Detektionseinrichtungen 34, 36 werten redundant das jeweilige an den Messeingängen 30, 32 anliegende Signal (das Eingangssignal) aus und übermitteln ihre Auswertung der Steuereinheit 18. Bei der Auswertung geht nur ein geringer Teil der elektrischen Energie der Eingangssignale verloren.

In Serie zu der zweiten Detektionseinrichtung ist jeweils eine Wandlereinheit 38 geschaltet. Die jeweiligen Wandlereinheiten 38, die mit dem ersten und dem zweiten Messeingang 30, 32 elektrisch verbunden sind, sind mit einem einzigen Ladekondensator 40 elektrisch verbunden. Die Wandlereinheiten 38 wandeln die elektrische Energie der Eingangssignale der Messeingänge 30, 32 um und führen die elektrische Energie dem Ladekondensator 40 zu. Die Wandlereinheiten 38 sind derart ausgelegt, dass sich eine Stromstärke des jeweiligen Eingangssignals von 5 mA einstellt.

In dem Ladekondensator 40 wird dabei eine Spannung erzeugt, die etwa der Spannung in der Stromschiene 12 entspricht. Der Ladekondensator 40 ist elektrisch mit der Stromschiene gekoppelt. Die von den Messeingängen 30, 32 stammende elektrische Energie kann somit zunächst in dem Ladekondensator 40 zwischengespeichert und anschließend der Stromschiene 12 zugeführt werden, um im weiteren Betrieb der SPS 10 wieder verbraucht zu werden.

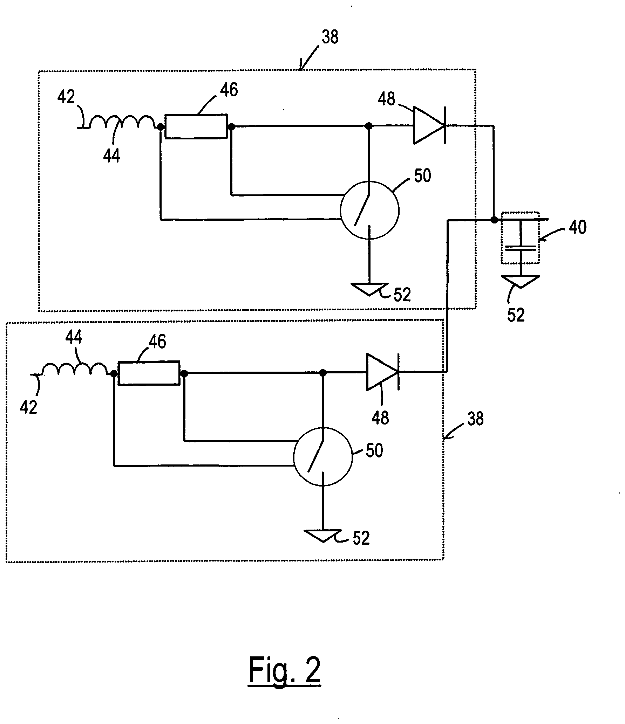

Fig. 2 zeigt die Wandlereinheiten 38 und den Ladekondensator 40 in einer detaillierteren Darstellung. Die Wandlereinheiten 38 sind jeweils identisch ausgebildet und umfassen einen Wandlereingang 42, welcher über die Detektionseinrichtungen 34, 36 mit dem jeweiligen Messeingang 30, 32 elektrisch verbunden ist. An den Wandlereingang 42 schließen sich in Serie geschaltet eine Spule 44, ein Shunt-Widerstand 46 sowie eine Diode 48 an. Die Anode der Diode 48 ist elektrisch direkt mit dem Shunt-Widerstand 46 verbunden. An die Anode der Diode 48 ist ein geregeltes Schaltelement 50 (z.B. ein Transistor) angeschlossen, das mit einer Schaltfrequenz von etwa 1 MHz wiederholt eine elektrische Verbindung zwischen der Anode der Diode 48 und Massepotential 52 herstellt. Die Kathode der Diode 48 ist mit einem ersten Anschluss des Ladekondensators 40 direkt elektrisch verbunden. Ein zweiter Anschluss des Ladekondensators ist direkt elektrisch mit dem Massepotential 52 verbunden.

Die Schaltfrequenz des geregelten Schaltelements 50 wird aufgrund der an dem Shunt-Widerstand 46 abfallenden Spannung geregelt. Sinkt diese Spannung unter einen vorbestimmten Schwellenwert, so wird das Schaltelement 50 abgeschaltet (z.B. dauerhaft geschlossen bzw. leitend geschaltet), so dass die Wandlereinheit 38 deaktiviert wird. Eine Wandlereinheit 38 zusammen mit dem Ladekondensator 40 kann einen Wandler bilden. Ein einzelner Wandler kann beispielsweise verwendet werden, wenn die SPS nur einen einzigen Messeingang 30, 32 umfasst.

Aufgrund der Schaltfrequenz des Schaltelements 50 wird die elektrische Energie des Eingangssignals, welche den Messeingängen 30, 32 zugeführt wird, zyklisch in den Ladekondensator 40 verschoben, wobei zugleich eine Spannungserhöhung erzielt wird, so dass der Ladekondensator 40 die Spannung der Stromschiene 12 aufweist. Die elektrische Energie der Eingangssignale kann somit wiederverwendet werden, wodurch der elektrische Wirkungsgrad der SPS 10 erhöht wird.

### Bezugszeichenliste

- 10: SPS
- 12: Stromschiene
- 14: Netzteil
- 16: Steckdose
- 18: Steuereinheit
- 20: erster Ausgang
- 22: zweiter Ausgang
- 24: Schalter
- 26: Not-Aus-Schalter
- 28: Lichtgitter
- 30: erster Messeingang
- 32: zweiter Messeingang
- 34: erste Detektionseinrichtung
- 36: zweite Detektionseinrichtung
- 38: Wandlereinheit
- 40: Ladekondensator
- 42: Wandlereingang
- 44: Spule
- 46: Shunt-Widerstand
- 48: Diode
- 50: geregeltes Schaltelement
- 52: Massepotential

## Patentansprüche

1. Speicherprogrammierbare Steuerung, SPS (10), mit
einer Energieversorgung (12), die elektrische Energie zum Betrieb der SPS (10) bereitstellt, und
zumindest einem Messeingang (30, 32), wobei der Messeingang (30, 32) ausgebildet ist, ein elektrisches Eingangssignal zu messen und/oder zu detektieren,
wobei
die SPS (10) ausgebildet ist, die elektrische Energie des Eingangssignals zumindest zum Teil der Energieversorgung (12) zuzuführen.

2. SPS (10) nach Anspruch 1,
**gekennzeichnet durch**
einen Sensor (26, 28), welcher mit dem Messeingang (30, 32) elektrisch verbunden ist und das Eingangssignal bereitstellt.

3. SPS (10) nach Anspruch 2,
**g**e**kennzeichnet durch**
zumindest einen Ausgang (20, 22), welcher zur Bereitstellung eines Ausgangssignals ausgebildet ist, wobei das Ausgangssignal dem Sensor (26, 28) zugeführt wird.

4. SPS (10) nach Anspruch 3,
**dadurch gekennzeichnet, dass** der Messeingang (30, 32) eine Stromsenke umfasst, welche einen maximalen Strom des Eingangssignals auf einen vorbestimmten Wert begrenzt.

5. SPS (10) nach zumindest einem der vorstehenden Ansprüche,
**dadurch gekennzeichnet, dass**
ein Wandler (38, 40) mit dem Messeingang (30, 32) und der Energieversorgung (12) gekoppelt ist, welcher die elektrische Energie des Eingangssignals zumindest zum Teil der Energieversorgung (12) zuführt.

6. SPS (10) nach Anspruch 5,
**dadurch gekennzeichnet, dass**
der Wandler (38, 40) eine Stromregelung umfasst, welche den Strom des Eingangssignals konstant hält und/oder begrenzt.

7. SPS (10) nach zumindest einem der vorstehenden Ansprüche,
**gekennzeichnet durch**
mehrere Messeingänge (30, 32), die jeweils mit einer separaten Wandlereinheit (38) gekoppelt sind, wobei jede Wandlereinheit (38) mit der Energieversorgung (12) elektrisch verbunden ist und die elektrische Energie der jeweiligen Eingangssignale zumindest zum Teil der Energieversorgung (12) zuführt.

8. SPS (10) nach Anspruch 7,
**dadurch gekennzeichnet, dass**
die Wandlereinheiten (38) mit einem gemeinsamen Ladekondensator (40) verbunden sind, wobei der Ladekondensator (40) die Wandlereinheiten (38) mit der Energieversorgung (12) elektrisch verbindet.

9. SPS (10) nach zumindest einem der vorstehenden Ansprüche,
**gekennzeichnet durch**
eine erste und eine zweite Detektionseinrichtung (34, 36), welche eingerichtet sind, das Eingangssignal des Messeingangs (30, 32) zu messen und/oder zu detektieren.

10. SPS (10) nach zumindest einem der vorstehenden Ansprüche,
**dadurch gekennzeichnet, dass**
die Energieversorgung (12) eine Gleichspannung von 24 Volt führt und/oder dass das Eingangssignal ein Gleichstrom mit einer Stromstärke von bis zu 20 Milliampere ist.

## Claims

1. A programmable logic controller, PLC (10), comprising
an energy supply (12) which provides electrical energy for operating the PLC (10); and
at least one measurement input (30, 32), wherein the measurement input (30, 32) is configured to measure and/or to detect an electrical input signal; and
wherein
the PLC (10) is configured to supply at least some of the electrical energy of the input signal to the energy supply (12).

2. A PLC (10) in accordance with claim 1,
**characterized by**
a sensor (26, 28) which is electrically connected to the measurement input (30, 32) and which provides the input signal.

3. A PLC (10) in accordance with claim 2,
**characterized by**
at least one output (20, 22) which is configured to provide an output signal, with the output signal being supplied to the sensor (26, 28).

4. A PLC (10) in accordance with claim 3,
**characterized in that**
the measurement input (30, 32) comprises a current sink which limits a maximum current of the input signal to a predetermined value.

5. A PLC (10) in accordance with at least one of the preceding claims,
**characterized in that**
a converter (38, 40) is coupled to the measurement input (30, 32) and to the energy supply (12) and supplies at least some of the electrical energy of the input signal to the energy supply (12).

6. A PLC (10) in accordance with claim 5,
**characterized in that**
the converter (38, 40) comprises a current regulation which keeps the current of the input signal constant and/or limits it.

7. A PLC (10) in accordance with at least one of the preceding claims,
**characterized by**
a plurality of measurement inputs (30, 32) which are each coupled to a separate converter unit (38), with each converter unit (38) being electrically connected to the energy supply (12) and supplying at least some of the electrical energy of the respective input signals to the energy supply (12).

8. A PLC (10) in accordance with claim 7,
**characterized in that**
the converter units (38) are connected to a common charging capacitor (40), with the charging capacitor (40) electrically connecting the converter units (38) to the energy supply (12).

9. A PLC (10) in accordance with at least one of the preceding claims,
**characterized by**
a first detection device and a second detection device (34, 36) which are adapted to measure and/or to detect the input signal of the measurement input (30, 32).

10. A PLC (10) in accordance with at least one of the preceding claims,
**characterized in that**
the energy supply (12) conducts a direct current voltage of 24 volts; and/or in that the input signal is a direct current having a current strength of up to 20 milliamperes.

## Revendications

1. Automate programmable industriel, API (10), comportant
une alimentation en énergie (12) qui fournit de l'énergie électrique pour le fonctionnement de l'API, et
au moins une entrée de mesure (30, 32), l'entrée de mesure (30, 32) étant réalisée pour mesurer et/ou détecter un signal d'entrée électrique, dans lequel
l'API (10) est réalisé pour amener l'énergie électrique du signal d'entrée au moins en partie à l'alimentation en énergie (12).

2. API (10) selon la revendication 1,
**caractérisé par**
un capteur (26, 28) qui est électriquement connecté à l'entrée de mesure (30, 32) et qui fournit le signal d'entrée.

3. API (10) selon la revendication 2,
**caractérisé par**
au moins une sortie (20, 22) qui est réalisée pour fournir un signal de sortie, le signal de sortie étant amené au capteur (26, 28).

4. API (10) selon la revendication 3,
**caractérisé en ce que**
l'entrée de mesure (30, 32) comprend un puits de courant qui limite un courant maximal du signal d'entrée à une valeur prédéterminée.

5. API (10) selon l'une au moins des revendications précédentes,
**caractérisé en ce que**
un convertisseur (38, 40) est couplé à l'entrée de mesure (30, 32) et à l'alimentation en énergie (12), qui amène l'énergie électrique du signal d'entrée au moins en partie à l'alimentation en énergie (12).

6. API (10) selon la revendication 5,
**caractérisé en ce que**
le convertisseur (38, 40) comprend une régulation de courant qui maintient constant et/ou limite le courant du signal d'entrée.

7. API (10) selon l'une des revendications précédentes,
**caractérisé par**
plusieurs entrées de mesure (30, 32) qui sont couplées chacune à un ensemble convertisseur séparé (38), chaque ensemble convertisseur (38) étant électriquement connecté à l'alimentation en énergie (12) et amenant l'énergie électrique des signaux d'entrée respectifs au moins en partie à l'alimentation en énergie (12).

8. API (10) selon la revendication 7,
**caractérisé en ce que**
les ensembles convertisseurs (38) sont connectés à un condensateur de charge (40) commun, le condensateur de charge (40) connectant électriquement les ensembles convertisseurs (38) à l'alimentation en énergie (12).

9. API (10) selon l'une des revendications précédentes,
**caractérisé par**
un premier et un second moyen de détection (34, 36) qui sont conçus pour mesurer et/ou détecter le signal d'entrée de l'entrée de mesure (30, 32).

10. API (10) selon l'une des revendications précédentes,
**caractérisé en ce que**
l'alimentation en énergie (12) mène une tension continue de 24 volts et/ou en ce que
le signal d'entrée est un courant continu d'une intensité de courant allant jusqu'à 20 milliampères.
